Europäisches Patentamt

European Patent Office

Office européen des brevets

(19)

(11) **EP 0 955 524 A2**

(12) **EUROPÄISCHE PATENTANMELDUNG**

(43) Veröffentlichungstag:
    **10.11.1999 Patentblatt 1999/45**

(51) Int. Cl.$^6$: **G01F 1/684**

(21) Anmeldenummer: **99105367.9**

(22) Anmeldetag: **16.03.1999**

(84) Benannte Vertragsstaaten:
    **AT BE CH CY DE DK ES FI FR GB GR IE IT LI LU MC NL PT SE**
    Benannte Erstreckungsstaaten:
    **AL LT LV MK RO SI**

(30) Priorität: **05.05.1998 DE 19819855**

(71) Anmelder:
    **Pierburg Aktiengesellschaft**
    **41460 Neuss (DE)**

(72) Erfinder:
  • **Lösing, Karl-Heinrich Dr.**
    **46519 Alpen (DE)**
  • **Wienecke, Thomas**
    **41352 Korschenbroich (DE)**
  • **Witty, Christian**
    **50968 Köln (DE)**
  • **Liedtke, Günter**
    **45239 Essen (DE)**
  • **Krinitz, Rainer**
    **47809 Krefeld (DE)**

(54) **Luftmassensensor**

(57)   Die Erfindung betrifft einen Luftmassensensor, ein Verfahren Abgleich des Luftmassensensors und ein Verfahren zur Signalauswertung im Luftmassensensor.

Es ist bekannt, Luftmassenmesser zu verwenden, deren Meßungenauigkeiten bei der routinemäßig erfolgenden Luftstrommassenerfassung durch einen in einem externen, zusätzlichen Erfassungsgerät befindlichen Mikroprozessor ausgeglichen werden, um die Wirkung von Widerstandstoleranzen zu kompensieren. Dabei werden die Differenzen zwischen einer sich am Bezugswiderstand bildenden Spannung und einem Standardwert auf der Basis gespeicherter Informationen ausgeglichen.

Nachteilig ist, daß jeder Luftmassenmesser an das Erfassungsgerät angepaßt werden muß, da bekanntlich jeder Luftmassenmesser eine eigene Meßtoleranz aufweist. Auch können mit nur einem Luftmassenmesser nicht die Strömungsrichtungen bestimmt werden.

Hiergegen weist der erfindungsgemäße Luftmassensensor, der als ein Luftmassensensormodul ausgeführt ist, zwei Temperatursensoren (6,7) und zwei Heizsensoren (4,5) auf, die in zwei getrennt wirkende Brücken (I, II) eingebunden sind und deren Brückenausgangssignale ($U_{mv}$, $U_{mh}$, $U_q$) auf einen im Luftmassensensormodul befindlichen Mikroprozessor (16) geführt sind. Der Mikroprozessor (16) wird derart abgeglichen, daß im Basismodus gemessene Brückenrohsignale ($U_{sv}$, $U_{sh}$, $U_{sq}$) in Stützstellen ($x_1$, $x_2$, $x_{3...}$) von Stützstellentabellen (St2, St3) eingeschrieben werden. In den Stützstellentabellen (St2, St3) ist in Form von Meßpunkten ($m_1$, $m_2$, $m_{3..}$) eine Kundenkennlinie hinterlegt werden.

Nach Abarbeitung einer dem Mikroprozessor (16) aufgeprägten Signalauswertung im Luftmassensensormodul erfolgt am Ausgang (A2) die Ausgabe eines, die strömenden Luftmassen interpretierenden Ausgangsspannungssignals ($U_a$), das an die vorgegebene Kundenkennlinie angepaßt ist, wozu die gemessenen Brückenrohsignalen ($U_{mv}$, $U_{mh}$) mit denen Ausgangsspannungssollsignalen ($U_{Soll1}$, $U_{Soll2}$, $U_{Soll3...}$ ) verglichen und kennlinienkorrigierend verändert werden. An einem weiteren Ausgang (A1) kann zudem die aktuelle, den Temperatursensors (6) umgebene Temperatur (T) durch ein, diese Temperatur (T) charakterisierendes Spannungssignal ($U_T$) abgegriffen werden.

Fig. 1

EP 0 955 524 A2

## Beschreibung

Die Erfindung betrifft einen Luftmassensensor nach dem Oberbegriff des Patentanspruchs 1, ein Verfahren zum Abgleich des Luftmassensensors sowie ein Signalauswerteverfahren des Luftmassensensors.

Luftmassensensoren bzw. Luftmassenmesser werden insbesondere zur Bestimmung der Ansaugluftmassen einer Brennkraftmaschine verwendet. Für die Ausführung von Luftmassensensoren werden dazu in bekannter Art und Weise Heißelement-Anemometer, auch als thermische Luftmassenmesser bezeichnet, verwendet. Zwei Sensoren bzw. Fühler, von denen einer die Temperatur der angesaugten Luft erfaßt und der andere auf eine bestimmte Übertemperatur zur Umgebungstemperatur aufgeheizt wird, liegen in verschiedenen Zweigen einer Wheatstone-Brückenschaltung. Der als Meßsonde dienende aufgeheizte Fühler wird durch den Luftstrom abhängig von dessen Geschwindigkeit und Temperatur abgekühlt. Der zum Halten der eingestellten Übertemperatur erforderliche zusätzliche Energiebetrag bzw. eine hiervon abhängige Größe ist dann ein Maß für die durchgesetzte Luftmasse.

Die DE 43 31 722 C2 offenbart einen Luftmassenmesser, ein Verfahren zur Erfassung einer strömenden Luftmenge und ein Gerät zur Erfassung eines elektrischen Ausgangsstroms des Luftmassenmessers. Der Luftmassenmesser weist einen Temperaturfühlerwiderstand und zwei Heizelemente in Form von Widerständen auf, die mit weiteren Widerständen zu einer Brückenschaltung verschaltet sind. Der Temperaturfühlerwiderstand und das zweite Heizelement bilden einen Luftmengendetektor und sind auf einer gemeinsamen Grundplatte in einem Luftstrompfad angeordnet. Das zweite Heizelement ist Bestandteil einer Steuerschaltung und befindet sich getrennt vom Luftmengendetektor im Luftstrompfad. An einem Bezugswiderstand, der sich in einem separaten Erfassungsgerät befindet, wird ein aus der Brückenschaltung ermitteltes elektrisches Stromsignal in eine Spannung umgewandelt, digitalisiert und in einen Mikroprozessor des Erfassungsgerätes eingegeben. Der Mikroprozessor gleicht bei der routinemäßig erfolgenden Luftmassenerfassung Differenzen zwischen einer sich am Bezugswiderstand bildenden Spannung und einem Standardwert auf der Basis gespeicherter Informationen aus, um die Wirkung der Toleranzen des Bezugswiderstandes zu beseitigen. Durch das ermittelte elektrische Ausgangsstromsignal erfolgt dann die Steuerung für die Kraftstoffeinspritzung.

Nachteilig ist, daß der Luftmassenmesser und das diesem nachgeschaltete Erfassungsgerät jeweils aufeinander abgestimmt werden müssen. Außerdem kann mit einem einzelnen Luftmassenmesser nicht die Strömungsrichtung der Luftmasse detektiert werden.

Hieraus ergibt sich die Aufgabe, einen Luftmassensensor und dessen Betriebsweise so zu gestalten, daß aufwendige Abgleichungen je Motor entfallen und gleichzeitig mit nur einem Luftmassensensor auch die Strömungsrichtung der Luftmasse detektiert werden kann.

Gelöst wird die Aufgabe durch die Merkmale des Patentanspruchs 1 sowie mit den Merkmalen der Patentansprüche 9 und 14.

Der Erfindung liegt die Idee zugrunde, den Luftmassensensor als ein kompaktes Luftmassensormodul in einfacher Bauweise zu schaffen, mit dem neben der Bestimmung der Menge einer strömenden Luftmasse auch deren Strömungsrichtung detektiert werden kann und das auch als Massenprodukt herstellbar ist. Dieses wird dadurch erreicht, daß der Luftmassensensor ein Meßelement bzw. Sensorelement aufweist, auf dem sich zwei getrennt wirkende Heizsensoren und zwei Temperatursensoren befinden, die zumindest mit zwei getrennt wirkenden Brücken verschaltet sind, die sich gleichfalls im Luftmassensensormodul befinden. Diese beiden Brücken ermöglichen die Bestimmung der Menge der Luftmasse bzw. des Luftmassendurchflusses und / oder die Strömungsrichtung der Luftmasse.

Weiterhin erfolgt durch Integration eines Mikroprozessors in das Luftmassensensormodul und mit einer ausgewählten Programmierung die Signalverarbeitung der ermittelten Brückensignale bereits in diesem Mikroprozessor, wodurch eine höhere Meßgenauigkeit, eine höhere Flexibilität und ein erweiterter Funktionsumfang des Luftmassensensormoduls erreicht wird. Mit Hilfe von im Mikroprozessor abgelegten Stützstellen in Tabellenform und einer individuellen Signalverarbeitung ist es möglich, die Luftmassensensormodule unabhängig von Sensortoleranzen auf je eine bestimmte Motortypenreihe abzustimmen. Dadurch werden bereits beim Herstellen des Luftmassensensors Sensorreihen geschaffen, die an ihren Schnittstellen zu weiteren Geräten gleiche Signalgrößen aufweisen, gewissermaßen geeicht sind. Diese unterschiedlichen Sensortoleranzen werden durch in einem Basismodus bzw. Abgleichmodus ermittelte Meßwerte bzw. Korrekturwerte ausgeglichen, die in die Stützstellentabellen des Mikroprozessors eingetragen werden. Um ein in sich geschlossenes Luftmassensensormodul zu schaffen, sind notwendige Trimmwiderstände zum Abgleich von Heizsensorabweichungen und erforderliche Lastwiderstände der Brückenschaltungen im Modul integriert.

Vorteilhafte Ausführungen sind in den Unteransprüchen enthalten.

Die Temperatursensoren und Heizsensoren sind in zwei getrennte Membranen eingebracht, die auf einem Substrat des Meßelements aufgetragen sind. Die Membranen sind vorzugsweise in einer Ebene und auf einer Seite des Substrates aufgebracht.

Durch das Aufbringen sehr dünner Membranen auf das Substrat wird die abfließende Wärme gering gehalten und außerdem die wärmeträge Masse minimiert. Durch die geringe Wärmekapazität der Membranen und der Heizstruktur werden zudem geringe Einschaltzeiten sowie eine hohe Dynamik des Meßelementes realisiert. Diese Dynamik ist für die Anwendung bei Massenstrommessungen mit Rückströmung vorteilhaft. Ein Temperaturübertrag zwischen den Heizsensoren und von diesen zu den Temperatursensoren wird durch eine geeignete Wahl des Abstandes zwischen den Heizsensoren und den Temperatursensoren verhindert, wodurch Meßfehler vermieden werden.

Die Membranen schützen die eingebetteten Sensoren vor chemischen Beanspruchungen. Dünne Membranen ermöglicht zudem, daß die Heizsensoren sowie die Temperatursensoren gleiche thermische Ansprechzeiten aufweisen.

Vorzugsweise werden Silicium als Substrat und Siliciumoxyd als Membrane verwendet. Die Nutzung der Siliciumtechnologie ermöglicht es, die Widerstandswerte der Heizsensoren und der Temperatursensoren zu reduzieren, wodurch auch die Abmessungen klein gehalten werden können, trotz der Bedingung, daß in jeder Brücke ein Brückenzweig hochohmiger als der andere sein muß. Dies Bedingung wird dadurch erfüllt, daß durch zusätzliche Mittel eine Spannungsreduzierung im Temperaturbrückenzweig je Brücke geschaffen wird. Bei einer dadurch erreichten kleineren Speisespannung kann demzufolge der Widerstandswert des Temperatursensors reduziert werden, wodurch sich auch die Abmaße des Temperatursensors reduzieren. Dieselbe Reduzierung der Spannung erfolgt auch im anderen Brückenzweig mit dem Heizsensor, dem Heizbrückenzweig, um ein Gleichgewicht der Brücke zu behalten. Diese Reduzierung erfolgt gleichfalls in der zweiten, getrennt wirkenden Brücke.

Zur weiteren Wärmeableitung und damit zur Verhinderung einer gegenseitigen Temperaturbeeinflussung der Heizsensoren und Temperatursensoren wird zusätzlich zur guten Isolation der dünnen Membranen zusätzlich die Wärme durch verbleibende Stege am Substrat an die Umgebung abgegeben. Zu diesem Zweck wird das Substrat auf einem gut wärmeleitenden Substratträger aufgeklebt, vorzugsweise einer Keramik. Die Keramik selbst wird mittels Wärmeleitkleber, der mit kleinen Kugeln definierter Stärke gefüllt ist, auf einen Kühlkörper, vorzugsweise Aluminiumkühlkörper, geklebt, der mittels Rippen die Wärme an die Umgebungsluft abgibt. Die Kügelchen haben zusätzlich die Aufgabe, eine von Modul zu Modul gleichbleibende Dicke der Wärmeleitkleberschicht zu gewährleisten, d. h. eine bestimmte Höhentoleranz sowie eine gleichbleibende Wärmeabfuhr.

Da bereits am Substrat mit dem Meßelement ein Kühlkörper angebracht ist, wird durch den Kühlkörper die Temperatur des Substrates auf Ansauglufttemperatur gehalten, wodurch die bereits erwähnte thermische Beeinflussung zwischen Heizsensoren und Temperatursensoren zusätzlich minimiert wird.

Dieses Meßelement mit Substratträger wird im Strömungsdurchbruch eines Gehäuses des Luftmassensensormuduls derart gelagert, daß eine allseitige Fixierung bzw. Einspannung im Gehäuse erfolgt, wobei das strömende Medium am bzw. über das Meßelement einseitig vorbeigeführt wird. Durch die Einbettung des Meßelementes im Gehäuse ist dieses Meßelement vor Bruch und damit Zerstörung geschützt, und es weist zudem einen robusten aber einfachen Aufbau auf. Auch gegenüber Strömungen ist das Meßelement dieser Meßvorrichtung geschützt, da das Meßelement mit dem Strömungsdurchbruch des Gehäuses fluchtet, so daß die Strömungen das Meßelement selbst nicht angreifen können, da ein Rahmen angeordnet ist, d.h. der Substratträger ist von diesem Rahmen umgeben.

Der Mikroprozessor ist Bestandteil des Elektronikteils des Luftmassensensormoduls und auf einem Hybrid untergebracht. Über Leitungsverbindungen, beispielsweise Leiterbahnen, ist der Mikroprozessor mit dem Meßelement verbunden. Im Abgleichmodus des Mikroprozessors werden Signale gemessenen und in Stützstellentabellen eingeschrieben, wobei in den Stützstellentabellen Meßpunkte hinterlegt sind, die den kundenseitig geforderten Kennlinen entsprechen. Die Signale werden dabei als Brückenrohsignale initiiert, In den Meßpunkten der geforderten Kennlinie erfolgt dann ein Vergleich zwischen den Brückenausgangssignalen und den Soll-Signalen, wodurch für jeden festgelegten Meßpunkt ein Eintrag in die Stützstellentabellen erfolgt. Nach der vollständigen Ermittlung der Meßwerte bzw. Korrekturwerte und der Füllung der Stützstellentabellen erfolgt eine weitere Programmierung des Mikroprozessors mit der Signalverarbeitungssoftware für das Luftmassensensormodul. Der Mikroprozessor wird dazu in den Programmiermodus gebracht. Die zu programmierende Signalverarbeitungssoftware kann teilweise vom Kunden vorgegeben sein oder aber auch ermittelt werden, beispielsweise durch Versuche.

Innerhalb der Signalauswertung erfolgt in einem Signalauswertepfad die Ermittlung eines die Luftmassenmenge interpretierendes Ausgangssignals mit Hilfe der in den Stützstellentabellen abgelegten Meßwerte, auch als Absolutwerte bezeichnet, bzw. der Korrekturwerte. Über einen weiteren Signalauswertepfad wird zusätzlich ein ermitteltes Temperatursignal ausgegeben. Dieses Temperatursignal kann als Information über die Außentemperatur der angesaugten Luft und damit beispielsweise zur Heizungsregulierung einer Fahrzeugkabine genutzt werden. Es erfolgt auch eine bessere Bestimmung der Kraftstoffeinspritzung, da das die Luftmassenmenge interpretierende Ausgangssignal des ersten Signalauswertepfades zusätzlich zur Temperaturkompensation mittels angepaßter Brückenwiderstände der vorderen Brücke in der Software über Ausgangssignalstützstellen und Temperaturstützstellen der Stützstellentabelle nachkompensiert wird.

Die Software zur Verarbeitung der Signale kann kurz vor Serienanlauf definiert werden.

Anhand eines in der Zeichnung dargestellten Ausführungsbeispiels soll die Erfindung näher erläutert werden.

Es zeigen:

Figur 1    ein erfindungsgemäßes Luftmassensensormodul in vereinfachter Darstellung,

Figur 2    eine Schnittdarstellung im Schnitt II-II aus der Figur 1,

Figur 3    eine Draufsicht auf ein Meßelement im Luftmassensensormodul,

Figur 4    eine Schaltungsanordnung des Luftmassensensormoduls,

Figur 5    einen Ablaufplan einer Signalverarbeitung im Luftmassensensormodul.

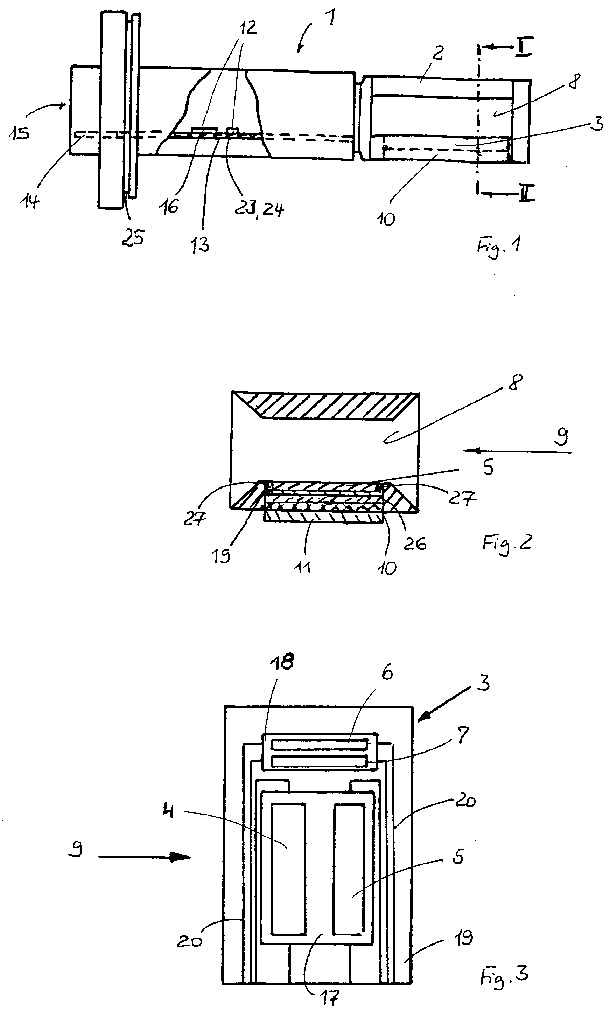

Das in Figur 1 dargestellte Luftmassensensormodul weist an einem Meßkörper 1 außer anderen in diesen Figuren nicht näher dargestellten und bezeichneten Teilen ein Gehäuse 2 für ein Meß- bzw. Sensorelement 3 mit Sensoren in Form von Heizsensoren 4, 5 und Temperatursensoren 6, 7 auf (siehe auch Figur 3). In dem Gehäuse 2 ist ein Strömungsdurchbruch 8 für eine Strömung 9 eingearbeitet. Das Meßelement 3 liegt dabei an die Strömung 9 angrenzend plan im Gehäuse 2 unterhalb bzw. oberhalb der Strömung 9 etwa mittig im Strömungsdurchbruch 8. Am Meßelement 3 und vorzugsweise im Gehäuse 2 integriert ist ein Kühlkörper 10, beispielsweise aus Aluminium. Im Meßkörper 1 sind auf einem Hybrid 13 Elektronikteile 12 untergebracht, die elektrisch über einen Steckverbinder 14 im Anschlußteil 15 mit einer weiteren Elektronikeinheit für diversen Anzeigen (nicht dargestellt) bzw. einer Stromversorgungseinheit (nicht dargestellt) für das Luftmassensensormodul verbunden sind. Die Elektronikteile 12 können eine vollständige Auswerte- und Regelelektronik sein und beispielsweise Operationsverstärker 23, 24 beinhalten. Zusätzlich ist ein Mikroprozessor 16 auf dem Hybrid 13 aufgebracht, der wie die Elektronikteile 12 mit dem Meßelement 3 über Leiterbahnen und Anschlüsse elektrisch verbunden ( nicht näher dargestellt) ist.

Wie in Figur 2 erkennbar, ist der Strömungsdurchbruch 8 ein Strömungskanal, der im Einlaufquerschnitt eine Verengung aufweist, danach im Bereich des Meßelementes 3 parallel zueinander liegende Seiten aufweist und sich im Auslaufquerschnitt wieder erweitert. Der Auslaufquerschnitt kann je nach Strömungsrichtung 9 auch zum Einlaufquerschnitt werden. Diese Kanalform des Strömungsdurchbruchs 8 ist vorteilhaft, um die Verschmutzung an den Sensoren 4, 5, 6 und 7 gering zu halten, um die Meßvorrichtung winkelunempfindlich zu gestalten, insbesondere aber, um Rückströmungen sowie Rest-Rückströmungen mit Hilfe der zwei Heizsensoren 4,5 zu erfassen.

In Figur 3 ist das Meßelement 3 in einer Draufsicht vereinfacht dargestellt. Auf dem Meßelement 3 befinden sich zwei getrennte Membranen 17 und 18, in die jeweils zwei Heizsensoren 4, 5 bzw. zwei Temperatursensoren 6, 7 eingebettet sind. Durch die über den Sensoren 4, 5, 6 und 7 befindlichen Membranen 17 bzw. 18 sind die Sensoren 4, 5 bzw. 6, 7 selbst vor Verunreinigungen geschützt. Die Membranen 17, 18 bestehen aus Siliciumoxydschichten, die auf einem Substrat 19 des Meßelementes 3 aufgebracht sind und in die für die Schaffung der Sensoren 4, 5, 6 und 7 je eine leitende Schicht beispielsweise aus Nickel eingebracht ist. Das Meßelement 3 wird in Halbleitertechnologie hergestellt, wobei das Substrat 19 aus Silicium besteht. Hierdurch können kleine Strukturen auf dem Substrat 19 aufgebracht werden. Das Substrat 19 ist auf einem weiteren Sensorträger 26 mit guten wärmeleitenden Eigenschaften befestigt. Der Träger 26 ist dabei vorzugsweise eine Keramik und mit einem Befestigungsmaterial in Form eines Wärmeleitklebers auf dem Kühlkörper 10 aufgeklebt. Der Wärmeleitkleber enthält kleine Kugeln (nicht dargestellt) mit definierter Dicke, wodurch eine gleichbleibende Dicke einer Wärmeleitkleberschicht zur Gewährleistung einer bestimmten Höhentoleranz eingehalten wird und zusätzlich eine gleichbleibende Wärmeabfuhr erfolgt. Am Kühlkörper 10 befinden sich in vorteilhafter Art und Weise Rippen 11, um eine erhöhte Wärmeabgabe an die Umgebung zu realisieren. Damit das Meßelement 3 plan im Gehäuse 2 integriert ist, wird ein Rahmen 27 um den Sensorträger 26, d. h. um das Meßelement 3 angebracht.

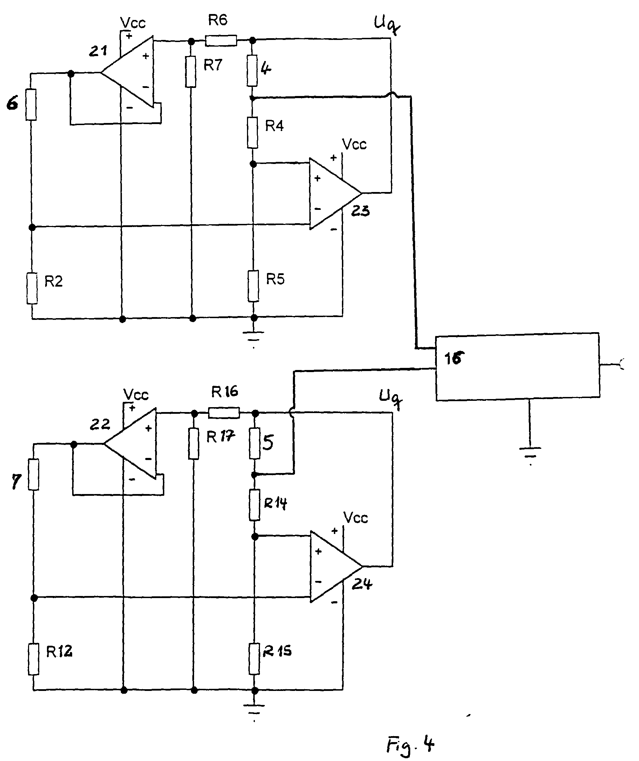

Die zwei leitenden Schichten für die Heizsensoren 4, 5 und die zwei leitenden Schichten für die Temperatursensoren 6, 7 werden in die Membranen 17 bzw. 18 eingebracht, so daß auf dem Substrat 19 zwei Temperatursensoren 6, 7 mit beispielsweise je 2000 $\Omega$ und zwei Heizsensoren 4, 5 mit beispielsweise jeweils 50 $\Omega$ untergebracht sind. Wahlweise können auf dem Substrat 19 auch noch zusätzliche Trimmwiderstände (nicht dargestellt) zum Ausgleich der Heizsensorabweichungen sowie aus Figur 4 ersichtliche Last- bzw. Brückenwiderstände R2, R4, R5 sowie R12, R14, R15, die bekanntlich für eine Brückenschaltung benötigt werden, sowie die elektrischen Anschlußleitungen bzw. Leiterbahnen 20 aufgebracht werden.

Durch die Nutzung von zwei Heizsensoren 4, 5 und zwei Temperatursensoren 6, 7 in zwei Brückenschaltungen I und II wird auch die Strömungsrichtung 9 des strömenden Mediums ermittelt. Dies erfolgt dadurch, daß die beiden Brückenschaltungen I und II in das Meßsystem des Luftmassensensormoduls eingebunden sind. In bekannter Art und Weise sind dabei der Heizsensor 4 sowie der Temperatursensor 6 mit den zugehörigen Lastwiderständen R2, R5 zu einer Brücke I und der Heizsensor 5 sowie der Temperatursensor 7 mit zugehörigen Lastwiderständen R12, R15 zu einer weiteren Brücke II verschaltet (Figur 4). An den jeweiligen Brückennullzweigen erfolgen in herkömmlicher Art die Abgriffe für die Regelung in den Elektronikteilen 12. Der dem strömenden Medium zuerst ausgesetzte Heizsensor 4 oder 5 bewirkt dabei ein anderes Brückenungleichgewicht und ein anderes Brückenausgangssignal als der dem Medium als zweiter ausgesetzte Heizsensor 5 oder 4. Wird beispielsweise in der Brückenschaltung I des ersten Heizsensors 4 ein kleineres Brückenausgangssignal gemessen als in der Brückenschaltung II des zweiten Heizsensors 5, so ist der zweite Heizsensor 5 dem strömenden Medium als erster ausgesetzt, wodurch sich die Strömungsrichtung 9 ermitteln läßt. Befindet sich der zweite Heizsensor 5 am rechten Rand des Substrates 19 bzw. der Membran 3, so kommt die Strömung von rechts. Da der Heizsensor 5 mit der zweiten, hinteren Brücke II verschaltet ist, würde eine Rückströmung entgegen der normalen (Vor-) Strömung 9 detektiert werden.

Die Heizsensoren 4, 5 und Temperatursensoren 6, 7 sind Widerstände mit vorzugsweise positiven Temperaturkoeffizienten und einer möglichst übereinstimmenden Temperaturabhängigkeit.
Zusätzlich zu dieser bekannten Anordnung weisen die Brücken I und II erfindungsgemäße Mittel auf, die die Eingangsspannung an dem jeweiligen Temperatursensor 6 bzw. 7 reduzieren. Diese Mittel bestehen jeweils aus einem in der Brückendiagonalen befindlichen Spannungsteiler mit den Widerständen R6, R7 bzw. R16, R17 sowie aus jeweils einem Spannungsfolger 21 bzw. 22. Der Spannungsfolger 21 ist dabei zwischen den Widerstand R6 und den Temperatursensor 6 geschaltet. Im zweiten Brückenzweig der Brücke I, dem Heizzweig, befindet sich als zusätzliches Mittel ein Widerstand R4 zwischen dem Heizsensor 4 und dem passiven Widerstand R5. Die Mittelabgriffe zwischen dem Temperatursensor 6 und dem Widerstand R2 einerseits und zwischen den Widerständen R4, R5 andererseits bilden den Brückennullzweig und sind mit einem negativen Eingang bzw. einem positiven Eingang eines Operationsverstärkers 23 verbunden. Die Brückenelektronik wird von einer Versorgungsspannungsquelle $V_{cc}$ gespeist und ist einseitig an die elektrische Masse angeschlossen. Die Widerstände R2, R7 und R5 haben ein gemeinsames Massebezugspotential. Eine entsprechende Schaltung gilt auch für die zweite Brücke II, wobei Widerstände R16 und R17 die Spannungsreduzierung im ersten Brückenzweig mit dem Temperatursensor 7 bewirken, im zweiten Brückenzweig mit dem Heizsensor 5 ein Widerstand R14 eingebunden ist und ein Operationsverstärker 24 verwendet wird.

Die Speisespannung $U_q$ des ersten Brückenzweiges der Brücke I, d. h. des Temperaturzweiges mit dem die Temperatur T messenden Temperatursensor 6, wird durch den Operationsverstärker 23 geliefert und durch den Spannungsteiler R6 und R7 reduziert, wobei das Widerstandsverhältnis beider Widerstände R6, R7 einen Faktor k bestimmt, um den die Speisespannung $U_q$ minimiert wird. Dieser Faktor k ergibt sich aus k = R7 / (R6 + R7) und ist stets kleiner 1. Um diesen Faktor k wird die Speisespannung $U_q$ für den ersten Brückenzweig reduziert. Der Spannungsfolger 21, auch Impedanzwandler genannt, ist ein gegengekoppelter Gleichstromverstärker, dessen Ausgangsspannung seiner Eingangsspannung entspricht. Der Spannungsfolger 21 dient zur Entkopplung des Temperatursensors 6 vom Spannungsteiler R6, R7, um eine Verfälschung des Spannungsteilerverhältnisses zu vermeiden. Zur Einhaltung des Brückengleichgewichtes wird das Widerstandsverhältnis der Widerstände R4 zu R5 gleichfalls so eingestellt, daß die Ausgangsspannung des anderen Brückenzweiges mit demselben Faktor k multipliziert wird und somit im Normalzustand zwischen den Brückenabgriffen keine Differenz eintritt. Diese Ausführungen zur ersten Brücke I gelten entsprechend auch für die zweite Brücke II.

In bekannter Art und Weise erfolgt in den Brücken I und II jeweils eine Temperaturnachregelung, wenn eine Störung die Temperatur des Heizsensors 4 bzw. 5 absinken oder ansteigen läßt, also auch deren Widerstandswert sich verändert. Diese Temperaturregelung erfolgt jeweils über den Operationsverstärker 23 bzw. 24. Die Nachregelung kann unterschiedlich und individuell gestaltbar durchgeführt werden. So kann zwischen dem Ausgang des Operationsverstärkers 23 bzw. 24 und der Brückenschaltung ein Stelltransistor (nicht dargestellt) eingebunden werden, auf den der Operationsverstärker 23 bzw. 24 derart einwirkt, daß der Stelltransistor weiter öffnet oder weiter schließt. Es ist aber auch möglich, den Ausgang des Operationsverstärkers 23 bzw. 24 direkt mit dem Brückenschaltungspunkt vor den Widerständen R6, R7 bzw. R16, R17 zu verbinden. Auf diese Weise erfolgt die Regelung immer so, daß die Temperaturdifferenz zwischen dem Temperatursensor 6 bzw. 7 und dem Heizsensor 4 bzw. 5 konstant gehalten wird. Mit dieser Temperaturregelung wird im Luftmassensensormodul die Übertemperatur des Heizsensors 4 bzw. 5 gegenüber dem Temperatursensor 6 bzw. 7 konstant gehalten, so daß aus dem Heizstrom oder einer anderen hiermit verknüpften Größe auf die Größe des vorbeiströmenden Luftstromes geschlossen wird.
In bekannter Art und Weise nimmt der Temperatursensor 6 bzw. 7 einen Widerstandswert an, der die Temperatur des strömenden Mediums charakterisiert. Je nach Masse der vorbeiströmenden Luft wird der Heizsensor 4 bzw. 5 mehr oder weniger abgekühlt, was zu einer Verstimmung bzw. zu einem Ungleichgewicht in der Brücke I bzw. II führt. Der zur Ausregelung notwendige Strom oder eine hiervon abgeleitete Größe ist dann das Maß für die an dem Heizsensor 4 bzw. 5 vorbeiströmende Luftmasse.
Zur Ermittlung eines diese Luftmassen interpretierenden Signals werden dazu mehrere Brückenausgangssignale $U_{mv}$ der ersten, vorderen Brücke I des Luftmassensensormoduls gemessen sowie mehrere Brückenausgangssignal $U_{mh}$ der zweiten, hinteren Brücke I des Luftmassensensormoduls gemessen und ausgewertet (wird noch ausgeführt). Die Brückenausgangssignale $U_{mv}$ werden über den Widerständen R4 und R5 des Heizbrückenzweiges der ersten, vorderen Brücke I agbegriffen, die Brückenausgangssignale $U_{mh}$

über den Widerständen R14 und R15 des Heizbrückenzweiges der zweiten, hinteren Brücke II.

Zur Detektierung von Rückströmung wird der bekannte isolierende Grenzschichteffekt ausgenutzt. Um auch kleinere Rückströmungen detektieren zu können, werden die beiden Heizsensoren 4, 5 möglichst nahe beieinanderliegend angeordnet. Dabei muß berücksichtigt werden, daß kein thermisches Überspringen vom vorderen ersten Heizsensor 4 auf den hinteren zweiten Heizsensor 5 durch Wärmeleitung stattfindet. Ebenfalls ist zu beachten, daß auch die Temperatursensoren 6, 7 durch die Heizsensoren 4, 5 nicht beeinflußt werden.

In vorteilhafter Ausführung weist das Meßelement 3 die Außenabmessungen von etwa 7,2 mm x 3,2 mm auf. Die länglichen Heizsensoren 4, 5 liegen auf dem Meßelement 3 in etwa mittig, jedoch parallel zueinander. Die Heizsensoren 4,5 verlaufen dabei quer zur Strömungsrichtung 9 und haben in Strömungsrichtung 9 einen gewissen Abstand voneinander, vorzugsweise einen Abstand von ca. 0,2 mm auf bzw. in der Membran 17. Die Breite der einzelnen Heizsensoren 4, 5 beträgt in etwa 300 $\mu$m. Die Länge der vorzugsweise gleichfalls parallel zueinander liegenden Temperatursensoren 6, 7 ergibt sich vorzugsweise aus den äußeren Maßen der zur Schaffung der Heizsensoren 4, 5 auf die Membran 17 aufgetragenen Nickelschichten. Die Gesamtdicke der Membranen 17, 18 beträgt 0,5 $\mu$m bis 4 $\mu$m.

Ausschlaggebend für die Konturen und die Lage der Heizsensoren 4, 5 und der Temperatursensoren 6, 7 sowie des Meßelementes 3 ist, daß die Anordnung auf dem Meßelement 3 auch die Geschwindigkeit von Rückströmungen der Luftmasse detektieren kann.

Bedingt durch die bei der Herstellung eines Luftmassensensors entstehenden technischen Fertigungstoleranzen der verwendeten Sensoren 4 bis 7 weist üblicher Weise jeder Luftmassensensor unterschiedliche elektrische Meßtoleranzen auf. Somit werden durch die Sensoren 4 bis 7 bei gleich großen am Meßelement 3 vorbeiströmenden Luftmassen unterschiedliche Signalgrößen erzeugt, so daß die Brückenausgangssignale in den Brücken I bzw. II von Luftmassensensor zu Luftmassensensor unterschiedlich sind. Daher mußte bisher jeder Luftmassensensor mit Hilfe einer zusätzlichen, externen Elektronikeinheit im Steuergerät (nicht dargestellt) der Kraftstoffeinspritzung an eine vom Kunden bzw. vom Hersteller der Motoren geforderte Kennlinie angepaßt werden.

Durch die erfindungsgemäße Integration des Mikroprozessors 16 und eine mit diesem verbundene digitale, korrigierende Signalverarbeitung im Luftmassensensormodul wird dieses toleranzunabhängig, wobei bereits im Luftmassensensormodul die Korrektur auf vom Kunden geforderte Kennlinien erfolgt. Die Kennlinien sind von der Motorart, der Zylinderanzahl und dem Motorhersteller abhängig. Dies berücksichtigend werden in den Mikroprozessor 16 nach komplettem Zusammenbau des Luftmassensensormoduls ermittelte Korrekturwerte bzw. Meßwerte als Absolutwerte eingeschrieben und eine motorspezifische Signalverarbeitungssoftware einprogrammiert.

Zur Ermittlung der Meßwerte bzw. der Korrekturwerte wird jedes Luftmassensensormodul in einen Basismodus bzw. Abgleichmodus gebracht, in dem der Mikroprozessor 16 noch einen sogenannten Rohstatus besitzt. Dazu wird das Luftmassensensormodul vorzugsweise in einen nachgestalteten Luftströmungskanal, beispielsweise eines Prüfarbeitsplatzes (nicht dargestellt), eingespannt. Bei einer vorgegebenen Luftmasse, d.h. bei einem vorgegebenen Luftstrom, werden jeweils Brückenausgangssignale als Brückenrohsignal $U_{sv}$ der ersten vorderen Brücke I und. $U_{sh}$ der zweiten hinteren Brücke II erzeugt sowie ein entsprechendes Brückenquellenrohsignal $U_{sq}$ gemessen. Diese Signale werden im jeweiligen Brückenabgleichzustand gemessen, d.h. wenn kein Brückenungleichgewicht in den Brücken I und II besteht. Dabei entsprechen das Brückenrohsignal $U_{sv}$ dem Spannungsabfall über den Widerständen R4 und R5 des Heizbrückenzweiges der ersten, vorderen Brücke I des Luftmassensensormoduls, das Brückenrohsignal $U_{sh}$ dem Spannungsabfall über den Widerständen R14 und R15 des Heizbrückenzweiges der zweiten, hinteren Brücke II. Das Brückenquellenrohsignal $U_{sq}$ entspricht der jeweilige Brückenspeisespannung der Brücken I und II, wobei zur Ermittlung der Meßwerte bzw. der Korrekturwerte das Brückenquellenrohsignal $U_{sq}$ aus der ersten Brücke I genutzt wird. Die Messungen werden für eine bestimmte Anzahl definierter Luftmassen vorzugsweise in Richtung „Vorströmung" durchgeführt, da beide Brückenrohsignale $U_{sv}$ und $U_{sh}$ in etwa gleich sind, da die Heizsensoren 4,5 und Temperatursensoren 6,7 in unmittelbarer Nähe zueinander angeordnet sind und die Brücken I und II selbst gleich aufgebaut sind, wodurch in beiden Brücken I und II das Brückenrohsignal $U_{sv}$ und das Brückenrohsignal $U_{sh}$ einen annähernd gleichen Spannungswert besitzen.

Die Brückenrohsignale $U_{sv}$, $U_{sh}$ beinhalten die von den Temperatursensoren 6, 7 und Heizsensoren 4,5 verursachten, toleranzbedingten Meßfehler. Die Brückenrohsignale $U_{sv}$, $U_{sh}$ werden daher gegen eine vom Kunden geforderte Luftmassenkennlinie abgeglichen. Diese Luftmassenkennlinie gibt eine gewünschte Abhängigkeit einer Ausgangsspannung $U_{Soll}$ von einer jeweils strömenden Luftmasse wieder und ist mit y-Werten auf einer Y-Achse festgeschrieben, welche für alle Sensormodule einer Serie gleich sind. Vorzugsweise werden 16 Meßpunkte $m_1$, $m_2$, $m_3$ usw. der vorgegebenen Luftmassenkennlinie in eine Stützstellentabelle St2 "Vorströmung" als y-Spannungssollwerte $U_{Soll}$ der Vorströmung und in eine Stützstellentabelle St3 "Rückströmung" bezogen auf die selben Durchsätze in die selben Meßpunkte $m_1$, $m_2$, $m_3$ als y-Spannungssollwerte $U_{Soll}$ der Rückströmung eingetragen, d. h. auf den $y_1$- bis $y_3$ - Stützstellen usw. der Stützstellentabellen St2 und St3 sind die Ausgangssollspannungen $U_{soll1}$ bis $U_{soll3}$ usw.

der definierten Luftmassen abgelegt. Die bei dem zugehörigen Durchsatz der Luftmassen gemessenen aktuellen Brückenrohsignale $U_{sv}$ werden an einer X-Achse als $x_1$- bis $x_3$ - Stützstellen usw. eingetragen und den Sollwerte $U_{soll1}$ bis $U_{soll3}$ auf der Y-Achse gegenübergestellt. Betragen beispielsweise die aus dem Luftmassensensormodul ermittelten aktuellen Brückenrohsignale $U_{sv}$ im Meßpunkt $m_1$ gleich 0,8 V, im Meßpunkt $m_2$ gleich 1,1 V und im Meßpunkt $m_3$ gleich 1,3 V usw., werden diese Brückenrohsignale $U_{sv1}$ bis $U_{sv3}$ usw. in die $x_1$- bis $x_3$ - Stützstellen usw. der "Vorströmung" eingetragen, die auch die $x_1$- bis $x_3$ - Stützstellen usw. der "Rückströmung" entsprechen. Diese unterschiedlichen Brückenrohsignale $U_{sv1}$ bis $U_{sv3}$ usw. entsprechen dabei einem eingestellten Durchsatz der Luftmassen von beispielsweise $m_1$ gleich 5 kg/h, $m_2$ gleich 10 kg/h und $m_3$ gleich 20 kg/h usw. . Durch die vom Kunden festgelegte Luftmassenkennlinie sind an den Meßpunkten $m_1$, $m_2$, $m_3$ jedoch von den Brückenrohsignalen $U_{sv1}$ bis $U_{sv3}$ usw. abweichende luftmassenäquivalente Ausgangssignale $U_{Soll1}$ bis $U_{Soll3}$ usw. an den $y_1$- bis $y_3$-Stützstellen usw. der Stützstellentabellen St2 und St3 hinterlegt. So sind beispielsweise in den $y_1$ bis $y_3$-Stützstellen usw. der „Vorströmung" ein jeweiliger Ausgangsspannungssollwert $U_{Soll1}$ von 1,1 V, ein $U_{Soll2}$ von 1,2 V und ein $U_{Soll3}$ von 1,3 V bzw. in den $y_1$ bis $y_3$-Stützstellen usw. der „Rückströmung" ein $U_{soll1}$ von 1,0 V, ein $U_{Soll2}$ von 1,19 V und ein $U_{soll3}$ von 1,28 V eingespeichert. Für alle Meßpunkte $m_1$, $m_2$, $m_3$ usw. werden nach Erkennung der zugehörigen Luftmassendurchsätze, d.h. dem zugehörigen Meßpunkt, diese durch die Ausgangsspannungssollwerte $U_{soll1}$ bis $U_{Soll3}$ usw. aus den $y_1$ bis $y_3$-Stützstellen zugeordnet, so daß für die aktuellen Brückenrohsignale $U_{sv1}$ bis $U_{sv3}$ usw. in jedem Meßpunkt $m_1$, $m_2$, $m_3$ ein beim Einsatz des Luftmassensensormoduls zu berechnendes Ausgangsspannungssignal $U_{y1}$ bis $U_{y3}$ usw. vorliegt, das dem Ausgangsspannungssollwert $U_{Soll}$ in diesen Meßpunkte $m_1$, $m_2$, $m_3$ entspricht. Somit wird das aktuelle Brückenrohsignal $U_{sv}$ über den aktuellen Luftmassendurchsatz durch die vom Kunden geforderte Ausgangsspannung $U_{Soll}$ ersetzt. Dabei entspricht beispielsweise ein gemessenes Brückenrohsignal $U_{sv}$ von 0,8 V einem $U_y$ von 1,1 V bei der Vorströmung und einem $U_y$ von 1,0 V bei der Rückströmung.
Wird vom Kunden für die Rückströmung eine Ausgangsspannung kleiner 1 V gefordert, werden in die $y_1$ bis $y_3$-Stützstellen usw. der „Rückströmung" beispielsweise ein $U_{Soll1}$ von 0,8 V, ein $U_{Soll2}$ von 0,85 V und $U_{soll3}$ von 0,83 V eingespeichert. Mit diesen werden die aktuellen Brückenrohsignal $U_{sv1}$ bis $U_{sv3}$ usw. über den aktuellen Luftmassendurchsatz den vom Kunden geforderten Ausgangsspannung $U_{Soll1}$ bis $U_{Soll3}$ usw. zugeordnet. Dabei entspricht dann ein gemessenes Brückenrohsignal $U_{sv}$ von 1,1 V einem $U_y$ von 0,85 V bei der Rückströmung.
Innerhalb der jeweiligen Stützstellen St2 und St3 erfolgt beim Einsatz des Luftmassensensormoduls durch eine Interpolation zwischen den Stützstellen eine Anpassung der außerhalb der 16 Meßpunkte liegenden, gemessenen Werte an die vollständige Kundenkennlinie für die „Vorströmung" und für die „Rückströmung".

Eine weitere Möglichkeit, die Stützstellentabellen St2 und St3 zu füllen, besteht darin, Korrekturwerte, d.h. Differenzwerte je Meßpunkt zu ermittelt.
So kann beispielsweise an den Meßpunkten $m_1$, $m_2$, $m_3$ usw. jeweils der aktuelle Ausgangsspannungswert $U_{sv}$ von 1,0 V; 1,1 V und 1,3 V anliegen. Da die Kundenkennlinie an diesen Meßpunkten $m_1$, $m_2$, $m_3$ jedoch den jeweiligen Ausgangsspannungssollwert von 1,1 V, 1,2 V und 1,3 V vorsieht, wird die zwischen beiden Ausgangsspannungswerten $U_{sv}$ und $U_{soll}$ liegende Differenz ermittelt und in die Stützstellen St2 eingeschrieben. Der Korrekturwert im Meßpunkt $m_1$ beträgt somit ein $U_1$ von 0,1V, im Meßpunkt $m_2$ $\Delta U_2$ von 0,1 V und im Meßpunkt $m_3$ $\Delta U_3$ von 0 V. Äquivalent läuft diese Korrektur-Differenzbildung in den Meßpunkten der Stützstellentabelle St3 „Rückströmung" ab. Die gemessene Brückenspannung $U_{sv}$ beträgt, wie im oberen Beispiel, am Meßpunkt $m_1$ 1,0 V, am zweiten Meßpunkt $m_2$ 1,1 V und am dritten Meßpunkt $m_3$ 1,3V. Durch die vom Kunden festgelegte Luftmassenkennlinie sind an diesen Meßpunkten $m_1$, $m_2$, $m_3$ jedoch abweichende luftmassenäquivalente Ausgangssignale mit einem jeweiligen Ausgangsspannungssollwert $U_{Soll1}$ von 0,8 V, 0,7 V bzw. 0,5 V. Der Korrekturwert $\Delta U_1$ beträgt somit für den Meßpunkt $m_1$ (-0,2 )V, für den Meßpunkt $m_2$ $\Delta U_2$ somit (-0,4) V und den Meßpunkt $m_3$ $\Delta U_3$ (-0,8) V.

Mit diesen Korrekturwerten $\Delta U_1$ - $\Delta U_3$ werden im Betrieb des Luftmassensensormoduls gemessene Brückenrohsignale $U_{mv}$ und $U_{mh}$ korrigiert. Bei der ersten Variante erfolgt ein Ersetzen der gemessene Spannungssignale $U_{mv}$, $U_{mh}$ durch die vorgegebenen Ausgangsspannungssollwert $U_v$, der Luftmassenkennlinie. Die aus beiden Varianten resultierenden korrigierten Ausgangsspannungssignale $U_{ak}$ werden dann im Luftmassensensormodul weiter verarbeitet ( wird noch ausgeführt).

Ein weiterer Abgleich des Luftmassensensormoduls erfolgt in einer weiteren Stützstellentabelle St1 "Temperaturausgang" und in einer Stützstellentabelle St4 "Temperaturkompensation", die empirisch ermittelte Daten beinhalten.

In der Stützstellentabelle St1 wird die vom Kunden vorgegebene Temperaturkennlinie beispielsweise durch 8 Meßpunkte beschrieben und in die y-Stützstellen der Stützstellentabelle St1 hinterlegt. In einem späteren Programmiermodus werden die Temperaturwerte $U_{temp}$ aus den Brückenrohsignalen $U_{mv}$ sowie $U_q$ berechnet und in die x-Stützstellen der Stutzstellentabelle St1 eingetragen. Die berechneten, aktuellen Temperaturwerte T werden durch Temperatursignale $U_{temp}$ beschrieben und auf die geforderte Kennlinie abgeglichen. Dazu werden die aktuellen Temperatursignale $U_{temp}$ den jeweils vorgegebenen Temperatursollsignalen $U_{Solltemp}$ zugeordnet und in die Stützstellentabelle St1 eingetragen. Auch hier erfolgt durch Interpolation eine Angleichung an die Temperaturkennlinie.

Durch die Verwendung der Temperaturstützstellentabelle St1 wird ein Spannungssignal $U_{temp}$, das die beim Einsatz des Luftmassensensormoduls am Temperatursensor 6 anliegende Temperatur T charakterisiert, kundenspezifisch angepaßt bzw. korrigiert..

Bekanntlich weisen Temperatursensoren 6, 7 und Heizsensoren 4, 5 in Abhängigkeit von der Umgebungstemperatur T unterschiedliche Widerstandscharakteristiken auf. Dadurch kommt es neben den fertigungsbedingten Toleranzen auch zu temperaturbedingten Fehlern innerhalb der Brücken I bzw. II. Um diese Fehler zu erkennen und als Verfälschung an den Meßwerten auszuschließen, werden Korrekturwerte für eine Temperaturkompensation in die Stützstellentabelle St4 eingelesen, da auch das korrigierte Ausgangsspanungssignal $U_{ak}$ temperaturbedingte Toleranzen aufweist.

Bei einer Temperaturkompensation sind ein Parameter die Temperatur T und ein weiterer Parameter die Menge der strömenden Luftmasse. So ergibt sich bei einer Durchflußmenge von 100 kg/h und beispielsweise -20°C ein anderer Temperaturkorrekturwert als bei beispielsweise bei 5 kg/h und -20°C. Da eine 3D-Interpolation zu rechenzeitintensiv ist, sind in der Stützstellentabelle St 4 vorzugsweise 5 Kennlinien abgelegt, wobei diese Kennlinien Korrekturwerte über der Luftmasse beinhalten. Zudem werden vorzugsweise 4 verschiedene, aufeinanderfolgende, die Luftmasse interpretierende korrigierte Ausgangsspannungssignale $U_y$ aus den Stützstellentabellen St2 bzw. St3 in die Stützstellentabelle St4 eingelesen und durch Interpolation an die jeweilige Temperaturkennlinie angeglichen. Die angeglichenen Ausgangsspannungssignale $U_a$ werden danach der jeweiligen Temperaturkennlinie zugeordnet.

In die Stützstellentabellen St2, St3 werden somit als x-Werte die aktuellen Brückensignale $U_{sv}$ und als y-Werte die jeweils geforderte Korrekturspannungskennlinie abgelegt.

Neben dem Ausfüllen der verwendeten Stützstellentabellen St1-St4 wird auch eine Signalverarbeitung bzw. ein Signalauswerteverfahren in den Mikroprozessor 16 einprogrammiert, wozu der ausgefüllte Mikroprozessor 16 in den Programmodus gebracht wird. Das Ausfüllen der Stützstellentabellen St1-St4 des Mikroprozessors 16 erfolgt individuell für jedes Luftmassensensormodul, die Festschreibung des Signalauswerteverfahrens erfolgt jedoch für alle Luftmassensensormodule einer Sensorreihe gleich.

Bei der Ermittlung der Menge des Massendurchflusses wird zwischen einer Signalauswertung durch Mittelwertbildung und einer reinen Signalauswertung ohne Mittelwertbildung unterschieden. Die Mittelwertbildung besitzt den Vorteil, daß das Luftmassensensormodul dann eine größere Unempfindlichkeit gegenüber Schmutzpartikeln an den Sensoren 4 bis 7 aufweist.

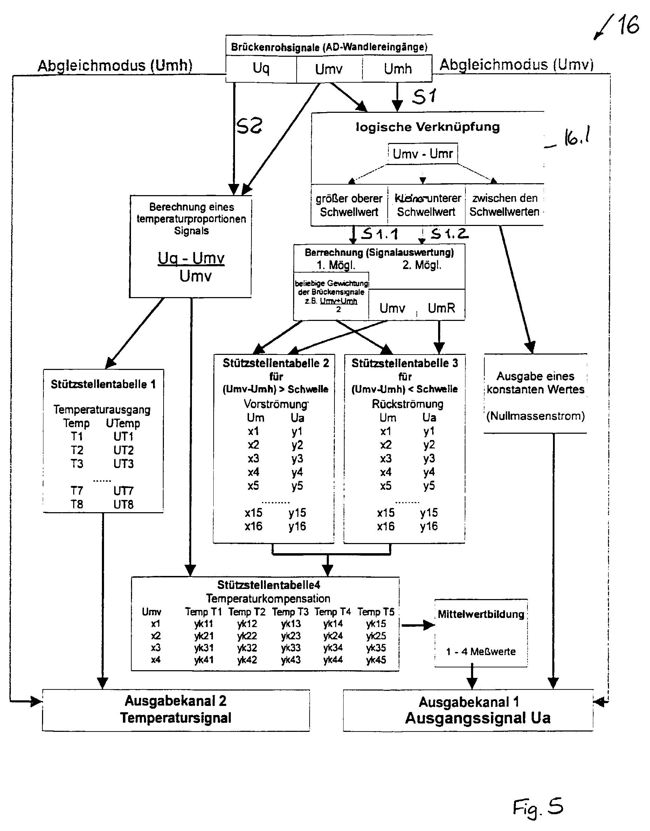

In Figur 5 ist ein solches Signalauswerteverfahren dargestellt.

Im ersten Signalauswertepfad S1 werden die gemessenen Brückensignale $U_{mv}$ aus der ersten Brücke I und $U_{mh}$ aus der zweiten Brücke II derart aufbereitet und bewertet, daß am Ausgang A2 des Luftmassensensormoduls ein die Menge der strömenden Luftmasse, d.h. den Massendurchfluß interpretierendes, Ausgangsspannungssignal $U_a$ anliegt.

Ein weiterer Signalauswertepfad S2 in der Signalverarbeitungssoftware ermöglicht die Erzeugung und Bereitstellung eines die Temperatur der Luftmasse repräsentierendes Temperatursignals $U_T$, das vom Ausgang A1 des Luftmassensensormoduls abgegriffen werden kann und die aktuelle Umgebungstemperatur T am Temperatursensor 6 charakterisiert.

Die Darstellung des Signalauswerteverfahrens zeigt innerhalb des ersten Signalauswertepfades S1 zur Ermittlung der Menge des Massendurchflusses zwei Signalauswertepfade S1.1 und S1.2.

Der Mikroprozessors 16 enthält tatsächlich programmtechnisch nur einen der Signalpfade S1.1 oder S1.2 einprogrammiert. Zur Beschreibung sind aber beide Signalpfade S1.1 und S1.2 als verschiedene Möglichkeiten in die Darstellung aufgenommen worden.

Im ersten Signalauswertepfad S1 erfolgt nach Messung der Brückensignale $U_{mv}$ und $U_{mh}$ die Bestimmung der Strömungsrichtung 9 der gemessenen Luftmassen. Dabei entspricht das Brückensignal $U_{mv}$ dem Spannungsabfall über den Widerständen R4 und R5 des Heizbrückenzweiges der Brücke I. Das Brückensignal $U_{mh}$ entspricht dem Spannungsabfall über den Widerständen R14 und R15 des Heizbrückenzweiges der Brücke II.

Die Bestimmung der Strömungsrichtung 9 findet in einer Auswertelogik 16.1 statt, die Bestandteil des Mikroprozessors 16 ist. In der Auswertelogik 16.1 werden beim Abgleich des Mikroprozessors 16 ein oberer und ein unterer Schwellwert vorgegeben, um eine eindeutige Unterscheidung der Strömungsrichtung 9 zu ermöglichen.

Dazu wird die Differenz Δ zwischen den Brückensignalen $U_{mv}$ und $U_{mh}$ gebildet. Ein zwischen den beiden Schwellwerten befindlicher Bereich, vorzugsweise von Δ 10-30 mV, bildet einen sogenannten Totbereich, durch den verhindert wird, daß bei extrem kleinen Differenzen zwischen dem vorderen Brückensignal $U_{mv}$ und dem hinteren Brückensignal $U_{mh}$ das Luftmassensensormodul ein instabiles, pulsierendes Ausgangsspannungssignal $U_a$ erzeugt. Durch Subtraktion des zweiten Brückensignales $U_{mh}$ vom ersten Brückensignal $U_{mv}$ sowie durch einen Vergleich mit den Schwellwerten wird festgelegt, ob die Differenz bzw. das daraus resultierende Signal oberhalb ( größer 30 mV), unterhalb (kleiner 10 mV) oder innerhalb der Schwellwerte liegt.

Liegt die Differenz innerhalb des Totbereiches, d. h. die Menge des Luftmassenstroms tendiert gegen Null, wird an den Ausgang A2 des Luftmassensensormoduls ein konstanter Ausgangsspannungssignalwert $U_a$, beispielsweise von 1 Volt, gegeben.

Liegt die Differenz jedoch oberhalb des oberen Schwellwertes oder unterhalb des unteren Schwellwertes, erfolgt die Signalauswertung durch die Mittelwertbildung, d.h. innerhalb des Signalauswertepfades S1.1 oder durch die reine Signalauswertung ohne Mittelwertbildung innerhalb des Signalauswertepfades S1.2.

Bei der Mittelwertbildung wird aus den Brückensignalen $U_{mv}$ und $U_{mh}$ ein Mittelwert gebildet, wodurch ein gemitteltes Brückensignal $U_{mvh}$ entsteht. Die durch die Mittelwertbildung berechneten Signale $U_{mvh}$ dienen zur Stützstellenmeßpunktsuche in der Stützstellentabelle St2 "Vorströmung" oder in der Stützstellentabelle St3 " Rückströmung" . Das hängt davon ab, welche Strömungsrichtung 9 ermittelt worden ist. Bei Erkennung einer positiven (Vor-) Strömung, d. h. wenn die Differenz zwischen den Brückensignalen $U_{mv}$ und $U_{mh}$ oberhalb des oberen Schwellwertes liegt, d.h. größer 30 mV ist, wird das gemittelte Brückensignal $U_{mvh}$ in die Stützstellentabelle St2 eingelesen. Bei Erkennung einer negativen (Rück-) Strömung, d. h. wenn die Differenz zwischen den Brückensignalen $U_{mv}$ und $U_{mh}$ kleiner als der untere Schwellwert ist, d.h. kleiner 10 mV, erfolgt das Einlesen in die Stützstellentabelle St3.

Mit Hilfe der im Abgleichmodus mit den Ausgangsspannungssignale $U_y$ gefüllten Stützstellentabellen St2 und St3 erfolgt in diesen ein Ersatz des gemessenen und gemittelten, toleranzbehafteten Brückensignals $U_{mvh}$ , zur Zwischenbestimmung eines Ausgabesignals $U_{my}$, wobei in den Stützstellentabellen St2 bzw. St3 eine Kennlinieninterpolation stattfindet. Die Kennlinieninterpolation ist in den jeweiligen Stützstellentabellen St2 und St3 unterschiedlich, da sich eine Vorströmung und eine Rückströmung in der Luftmassenkennlinie unterscheiden.

Die in den Stützstellentabellen St2 oder St3 ersetzten Ausgabesignale $U_{my}$ werden vorzugsweise einer zusätzlichen Temperaturkompensation unterzogen, um Ungenauigkeiten, bedingt durch die Temperaturabhängigkeit der Sensoren 4 bis 7 , auszuschließen. Dabei werden beispielsweise vier Ausgabesignale $U_{my}$ aus der Stützstellentabelle St2 bzw. aus der Stützstellentabelle St3 in die Stützstellentabelle St4 "Temperaturkompensation" eingelesen. Die Temperaturkompensation der korrigierten Ausgabesignale $U_{my}$ und damit die Ermittlung eines Ausgangsspannungssignals $U_{aT}$ erfolgt dabei durch einen Tabellenvergleich. Durch die Ermittlung einer aktuellen Temperatur T der strömenden Luftmasse ( wird noch ausgeführt) werden die Ausgabesignale $U_{my}$ einer Temperaturstützstelle $y_k$ in der Stützstellentabelle St4 zugeordnet, hinter der wiederum ein temperaturkompensiertes Ausgabesignal $U_{aT}$ liegt.

Bei der folgenden, bei der Programmierung optional festgelegten gleitenden Mittelwertbildung werden entweder aus einem ermittelten, temperaturkorrigierten Meßwert gleich das Ausgangsspannungssignal $U_a$ bestimmt oder aus zwei, drei oder vier aufeinanderfolgenden, ermittelten, temperaturkorrigierten Meßwerten ein gemitteltes Ausgangsspannungssignal $U_{aT}$ errechnet, um eine optimale Temperaturkompensation des Ausgangsspannungssignals $U_a$ beispielsweise für die Steuerung einer Kraftstoffeinspritzung zu erhalten. Diese Festlegung ist davon abhängig, welche Meßwertbildung das bessere Meßergebnis für das Ausgangsspannungssignals $U_a$ liefert.

Statt der Mittelwertbildung aus $U_{mv}$ und $U_{mh}$ können auch die reinen gemessenen Brückensignale $U_{mv}$ oder $U_{mh}$ zur Stützstellenmeßpunktsuche herangezogen werden und vorzeichenabhängig von der Differenz $U_{mv}$ und $U_{mh}$ in die Stützstellentabelle St2 oder in der Stützstellentabelle St3 eingelesen und in diesen interpoliert werden. Auch hier erfolgen vorher die Bestimmung der Strömungsrichtung 9 und danach die Korrektur der eingelesenen Brückensignale $U_{mv}$ oder $U_{mh}$ in den Stützstellentabellen St2 oder St3. Das korrigierte Ausgabesignale $U_{my}$ wird gleichfalls entweder aus der Stützstellentabelle St2 oder St3 in die Stützstellentabelle St4 eingelesen. Wie bereits beschrieben, erfolgen die Temperaturkompensation in der Stützstellentabelle St4 durch Tabellenvergleich und anschließend die optional festgelegte gleitende Mittelwertbildung sowie die Ausgabe des Ausgangsspannungssignals $U_a$.

Dieses Ausgangsspannungssignal $U_a$ stellt ein luftmassenproportionales Ausgangssignal dar.

Zur Lieferung eines zusätzlichen Temperatursignales $U_{temp}$ wird die Tatsache ausgenutzt, daß eine über dem Temperatursensor 6 abfallende Spannung $U_{temp}$ eine Funktion der Temperatur T in Abhängigkeit der Speisespannung $U_q$ ist, d.h. $U_{temp} = f(T)$ . Die Spannung $U_{temp}$ entspricht der am Brückennullzweig anliegenden Spannung $U_{mv}$.

Somit läßt sich aus dem den Luftmassenstrom interpretierenden Brückensignal $U_{mv}$ der ersten Brücke I und der Speisespannung $U_q$ ein Temperatursignal $U_{temp}$ berechnen. Dieses kann beispielsweise mit Hilfe der Formeln

$$U_{R5} = U_{mv} * U_{R5} / (R4+R5)$$

und

$$U_{temp} = U_q / 4 - U_{R5} \text{ erfolgen.}$$

Das errechnete Temperatursignal $U_{temp}$ wird gleichfalls in die Stützstellentabelle St1 "Temperatur" eingelesen und mit der kundenseitig vorgegebenen bzw. angegebenen Temperaturkennlinie, häufig die eines NTC-Widerstandes, verglichen. Durch die Stützstellentabelle St1 und die hinterlegten Vorgabewerte ist es somit unerheblich, ob das Luftmassensensormodul selbst einen NTC- Temperatursensor 6 oder einen PTC-Temperatursensor 6 besitzt. Diese Unterschiede werden beim Auslesen aus der Stützstellentabelle St1 ausgeglichen, da die Temperatursignale $U_{temp}$ durch Temperatursignal $U_{T1}$ -$U_{T8}$ ersetzt werden. Die berechneten Temperatursignale $U_{temp}$ werden äquivalenten Temperatursignalen $U_{T1}$ - $U_{T8}$ der Kennlinie zugeordnet, so daß am Ausgang A1 des Luftmassensensormoduls die die aktuelle Umgebungstemperatur T1, T2, T3 usw. interpretierenden Spannungssignale $U_{T1}$, $U_{T2}$, $U_{T3}$ usw. anliegen.

Die berechneten Temperatursignale $U_{temp}$ werden somit für die Temperaturkompensation im Luftmassensensormodul verwendet, können aber außerdem als Spannungssignale $U_{T1}$, $U_{T2}$, $U_{T3}$ für eine weitere regelungs- und / oder steuerungstechnische Berücksichtigung genutzt werden.

Mit dem beschriebenen Signalauswerteverfahren werden die Mikroprozessoren 16 einer ganzen Luftmassensensormodulreihe für eine spezielle Motortypenreihe programmiert. Diese Luftmassensensormodule ermöglichen dadurch eine motorunabhängige Pulsationskorrektur, eine exakte Temperaturkompensation im gesamten Temperaturbereich und ein linearisiertes Ausgangsspannungssignal $U_a$ . Dabei werden die Ansprechdynamik des Luftmassensensormoduls auf kleiner 1 ms reduziert und gleichzeitig die Genauigkeit erhöht. Durch Schaffung von Schnittstellenausgängen im Steckverbinder 14 sind eine freiwählbare Spannungslage des Ausgangsspannungssignals $U_a$ sowie eine Pulsweitenmodulation möglich. Dadurch ist eine Anpassung der Signalausgabe für nachgeschaltete, unterschiedliche Steuergeräte realisierbar. Weiterhin kann ein digitaler Busausgang geschaffen werden. Neben einer höheren Genauigkeit und höheren Flexibilität wird ein erweiteter Funktionsumfang geschaffen. So kann erkennbar gemacht werden, wenn mindestens einer der Sensoren 4 bis 7 ausgefallen ist und /oder wenn sich im Kabelbaum zum Steuergerät Unterbrechungen befinden.

Das Luftmassensensormodul wird in einem Einspannteil 25 ( siehe Figur 1) in einem nicht näher dargestellten Luftstrompfad ( Ansaugkanal) befestigt, wobei der Strömungsdurchbruch 8 in die Strömungsrichtung 9 weist. Dabei kann das Luftmassensensormodul ganz bzw. teilweise in den Luftstrompfad hineinreichen. Die auf dem Meßelement 3 angeordneten Sensoren 4 bis 7 müssen jedoch von der Luftstrommasse überströmt werden.

## Patentansprüche

1.  Luftmassensensor zur Messung der Masse eines strömenden Mediums, insbesondere zur Messung der Ansaugluft von Brennkraftmaschinen, mit einem Temperatursensor und zwei Heizsensoren, die zu einer Brückenschaltung verschaltet sind, wobei der Temperatursensor und der zweite Heizsensor auf einer gemeinsamen Grundplatte in einem Luftstrompfad angeordnet sind, dadurch gekennzeichnet, daß

    der Luftmassensensor als ein in sich geschlossenes kompaktes Luftmassensensormodul ausgeführt ist, das einen weiteren Temperatursensor (7) zusammen mit dem ersten Temperatursensor (6) und den beiden Heizsensoren (4, 5) aufweist, die auf einem gemeinsamen Meßelement (3) in direkter Nähe zueinander angeordnet sind, daß diese Temperatursensoren (6, 7) und Heizsensoren (4, 5) zu zwei getrennt wirkenden Brücken (I, II) verschaltet sind, wobei Brückenwiderstände (R2, R5, R12, R15) der Brücken (I, II) mit im Luftmassensensormodul integriert sind und ein Mikroprozessor (16) im Luftmassensensormodul eingebunden ist, durch den Meßungenauigkeiten mittels Korrekturdaten korrigierbar sind.

2.  Luftmassensensor nach Anspruch 1, dadurch gekennzeichnet, daß das Meßelement (3) aus einem Substrat (19) besteht, auf dem zwei separate Membranen (17, 18) aufgebracht sind, wobei in die eine Membrane (17) die Heizsensoren (4, 5) und in die andere Membrane (18) die Temperatursensoren (6,7) eingebettet sind.

3.  Luftmassensensor nach Anspruch 2, dadurch gekennzeichnet, daß das Substrat (19) ein Silicium ist und daß die Membranen (17, 18) aus Siliciumoxyd bestehen, wobei die Membranen (17,18) eine Dicke von 0,5 μm bis 4 μm aufweisen.

4.  Luftmassensensor nach Anspruch 2 oder 3, dadurch gekennzeichnet, daß auf dem Substrat (19) Leiterbahnen (20) aufgebracht sind und das Substrat (19) auf einem gut wärmeleitenden Substratträger (26), vorzugsweise eine Keramik, aufgebracht ist.

5.  Luftmassensensor nach Anspruch 4, dadurch gekennzeichnet, daß die Aufbringung durch einem Befestigungsmaterial in Form eines Wärmeleitklebers erfolgt, der kleine Kugeln mit definierter Dicke enthält, wodurch eine gleichbleibende Dicke einer Wärmeleitkleberschicht zur Gewährleistung einer bestimmten Höhentoleranz eingehalten wird und zusätzlich eine gleichbleibende Wärmeabfuhr erfolgt.

6.  Luftmassensensor nach einem der Ansprüche 1 bis 5, dadurch gekennzeichnet, daß in jeder Brücke (I, II) zur Spannungsreduzierung am jeweiligen Temperatursensor (6, 7) vor dem Temperatursensor (6, 7) je ein Spannungsteiler (R6, R7, R16, R17) sowie ein Spannungsfolger (21, 22) eingebunden sind, daß der Spannungsfolger (21, 22) vor dem Temperatursensor (6, 7) und in Reihe zum ersten Widerstand (R6, R16) des Spannungsteilers (R6, R7, R16, R17) angeordnet ist, daß der zweite Widerstand (R7, R17) des Spannungsteilers parallel zum Spannungsfolger (21, 22) sowie zum Temperatursensor (6, 7) und einem Brückenwiderstand (R2, R12) geschaltet ist und parallel zum Heizbrückenzweig liegt, der aus dem Heizsensor (4, 5) und einem weiteren Brückenwiderstand (R5, R15) besteht, wodurch die Spannung in dem Brückenzweig des Temperatursensors (6, 7) um einen Faktor (k) reduziert wird und zur Spannungsreduzierung um denselben Faktor (k) im Heizbrückenzweig ein weiterer Widerstand (R4, R14) in Reihe zum Heizsensor (4,5) eingebunden ist, um die Einhaltung des Brückengleichgewichts zu realisieren.

7. Luftmassensensor nach einem oder mehreren der Ansprüche 1 bis 6, <u>dadurch gekennzeichnet</u>, daß das Luftmassensensormodul ein Gehäuse (2) aufweist, das einen Strömungsdurchbruch (8) besitzt, in dem das Meßelement (3) derart gehalten ist, daß eine Strömung (9) einseitig am Meßelement (3) vorbei strömt, wobei das Meßelement (3) im Strömungsdurchbruch (8) des Gehäuses (2) allseitig fixiert ist.

8. Luftmassensensor nach Anspruch 7, <u>dadurch gekennzeichnet</u>, daß der Strömungsdurchbruch (8) als Strömungskanal ausgebildet ist, der ein Vierkantloch aufweist und in einem Einlaufquerschnitt eine Verengung besitzt, danach im Bereich des Meßelementes (3) parallel zueinanderliegende Seiten aufweist sowie einen Auslaufquerschnitt besitzt, der sich wieder erweitert.

9. Verfahren zum Abgleich eines Luftmassensensormoduls nach einem der Ansprüche 1 bis 8, <u>dadurch gekennzeichnet</u>, daß

das Luftmassensensormodul verschiedenen definierten, jeweils einen Meßpunkt ($m_1$, $m_2$, $m_3$...) bildenden Luftmassen ausgesetzt wird an den einzelnen Meßpunkten ($m_1$, $m_2$, $m_3$...) Brückenrohsignale ($U_{sv}$, $U_{sh}$) einer in Strömungsrichtung (9) liegenden ersten vorderen Meß-Brücke (I) und einer in Strömungsrichtung (9) liegenden zweiten hinteren Meß-Brücke (II) erfaßt werden, wobei diese Brückenrohsignale ($U_{sv}$, $U_{sh}$) jeweils ein Maß für die durch die jeweils strömende Luftmasse bedingte Nachregelung auf ein erneutes Brückengleichgewicht sind,
die Brückenrohsignale ($U_{sv}$, $U_{sh}$) an den einzelnen Meßpunkten ($m_1$, $m_2$, $m_3$...) definiert in Stützstellen ($x_1$, $x_2$, $x_3$...) für eine spätere Interpolation der Stützstellentabellen (St2, St3) in einen Mikroprozessor (16) eingeschrieben werden,
die einzelnen Meßpunkte ($m_1$, $m_2$, $m_3$...) der definierten Luftmasse so gewählt werden, daß sie mit den festgelegten Meßpunkte ($m_1$, $m_2$, $m_3$...) einer vorgegebenen Kennlinie übereinstimmen, die eine vorgegebene Funktionsabhängigkeit eines Ausgangsspannungssollwerte ($U_{Soll1}$, $U_{Soll2}$, $U_{Soll3}$...) von einer strömenden Luftmasse darstellt,
die Ausgangsspannungssollwerte ($U_{Soll1}$, $U_{Soll2}$, $U_{Soll3}$) an den festgelegten Meßpunkte ($m_1$, $m_2$, $m_3$...) der vorgegebenen Kennlinie zur Nachbildung derselben in Stützstellen ($y_1$, $y_2$, $y_3$...) der Stütztabellen (St2, St3) eingetragen werden .

10. Verfahren zum Abgleich nach Anspruch 9, <u>dadurch gekennzeichnet</u>, daß die Brückenrohsignale ($U_{sv}$, $U_{sh}$) in den Meßpunkten ($m_1$, $m_2$, $m_3$...) durch die Ausgangsspannungssollwerte ($U_y$) ersetzt werden.

11. Verfahren zum Abgleich nach Anspruch 9, <u>dadurch gekennzeichnet</u>, daß Differenzen zwischen den Brückenrohsignalen ($U_{sv}$, $U_{sh}$) und den Ausgangsspannungssollwerten ($U_y$) in den Meßpunkten ($m_1$, $m_2$, $m_3$) ermittelt werden und diese Differenzen als Korrekturwerte ( $\Delta U_1$, $\Delta U_2$, $\Delta U_3$) in die Meßpunkte ($m_1$, $m_2$, $m_3$...) der jeweiligen Stützstellentabellen (St2, St3) eingeschrieben werden.

12. Verfahren zur Signalauswertung im Luftmassensensormodul nach einem der Ansprüche 1 bis 9 mit Hilfe von gemessenen Brückensignalen beim Durchfluß einer strömenden Luftmasse am Luftmassensensormodul, <u>dadurch gekennzeichnet</u>, daß , zum Ermitteln der Größe eines Luftstromes bzw. der Menge der Luftmasse in einem Signalauswertepfad (S1) die gemessenen Brückensignale ($U_{mv}$) einer in Strömungsrichtung (9) liegenden ersten vorderen Brücke (I) und die gemessenen Brückensignale ($U_{mh}$) einer in Strömungsrichtung (9) zweiten hinteren Brücke (II) in einen Mikroprozessor (16) eingegeben werden,

danach eine Bestimmung der Strömungsrichtung (9) der Luftmasse erfolgt, wobei das Brückensignal ($U_{mv}$) der ersten Brücke (I) und das Brückensignal ($U_{mh}$) der zweiten Brücke (II) voneinander subtrahiert werden und die ermittelte Differenz ($\Delta$) einem Vergleich mit eingestellten Schwellwerten unterzogen wird, wobei ein von den Vorzeichen dieser Differenz ($\Delta$) abhängiges Auslesen aus den Stützstellentabellen (St2, St3) erfolgt, in denen Korrekturwerte ($\Delta U_1$, $\Delta U_2$, $\Delta U_3$) oder Ausgangsspannungssollwerte ($U_y$) als Absolutwerte für eine vorgegebene Kennlinie abgelegt sind,

eine Auslesen aus den Stützstellentabellen (St2, St3) nur dann erfolgt, wenn die Differenz ($\Delta$) der gemessenen Brückensignale ($U_{mv}$, $U_{mh}$) einen oberen Schwellwert überschreitet oder einen unteren Schwellwert unterschreitet, wobei bei einer Differenz ($\Delta$) der gemessenen Brückensignale ($U_{mv}$, $U_{mh}$) innerhalb des oberen und unteren Schwellwertes ein konstantes Ausgangsspannungssignal ($U_a$) am Ausgang (A2) ausgegeben wird,

ein mit den Korrekturwerten ($\Delta U_{1-3}$) korrigiertes oder die Ausgangsspannungssollwerte ($U_y$) übernehmendes Ausgabesignal ($U_{my}$) zusätzlich einer Temperaturkompensation in einer weiteren Stützstellentabelle (St4) unterzogen werden, der ein aus dem gemessenen Brückensignal ($U_{mv}$) der ersten Brücke (I) und deren Speisespannung($U_q$) berechneten Temperatursignal ($U_{temp}$) zugeleitet wird und deren Stützstellen ($y_k$) empirisch ermittelt wurden, und daß am Ausgang (A2) des Luftmassensensormoduls ein temperaturkompensiertes, korrigiertes Ausgangsspanungssignal ($U_a$) abgenommen wird.

13. Verfahren zur Signalauswertung nach Anspruch 12, dadurch gekennzeichnet, daß innerhalb eines weiteren Signalauswertepfades (S2) das zusätzliches Temperatursignal ($U_{temp}$) ermittelt wird, dem durch eine in einer Stützstellentabelle (St1) hinterlegte Temperaturkennlinie Temperaturausgangssignale ($U_{T1}$, $U_{T2}$, $U_{T3}$) zugeordnet werden, die an einem weiteren Ausgang (A1) des Luftmassensensormoduls anliegen.

14. Verfahren zur Signalauswertung nach Anspruch 12 oder Anspruch 13, dadurch gekennzeichnet, daß das Temperatursignal ($U_{temp}$) aus einem Verhältnis des Speisespannungssignales ($U_q$) zum Brückensignal ($U_{mv}$) der ersten vorderen Brücke (I) berechnet wird.

15. Verfahren zur Signalauswertung nach einem der Ansprüche 12 bis 14 , dadurch gekennzeichnet, daß innerhalb des ersten Signalauswertepfades (S1) entweder eine Mittelwertbildung (S1.1) der Brückensignale ($U_{mv}$, $U_{mh}$) erfolgt oder eine reine Signalauswertung (S1.2) ohne Mittelwertbildung der Brückensignale ($U_{mv}$, $U_{mh}$) durchgeführt wird.

16. Verfahren zur Signalauswertung nach einem der Ansprüche 12 bis 15, dadurch gekennzeichnet, daß bei einer Differenz ($\Delta$) innerhalb der vorgegebenen Schwellwerte ein konstantes Ausgangsspannungssignal ($U_a$) ausgegeben wird.

17. Verfahren zur Signalauswertung nach einem der Ansprüche 12 bis 16, dadurch gekennzeichnet, daß zwischen den Stützstellen ($x_1$, $x_2$, $x_{3...}$) innerhalb der Stützstellen (St2, St3) eine Kennlinieninterpolation durchgeführt wird.

Fig. 1

Fig. 2

Fig. 3

Fig. 4

/16

| Brückenrohsignale (AD-Wandlereingänge) | | |
|---|---|---|
| Uq | Umv | Umh |

Abgleichmodus (Umh)

Abgleichmodus (Umv)

S1

S2

**logische Verknüpfung**

_ 16.1

| Umv - Umr |
|---|

| größer oberer Schwellwert | kleiner unterer Schwellwert | zwischen den Schwellwerten |
|---|---|---|

S1.1  S1.2

**Berechnung eines temperaturproportionen Signals**

$$\frac{Uq - Umv}{Umv}$$

**Berrechnung (Signalauswertung)**
1. Mögl.                    2. Mögl.

| beliebige Gewichtung der Brückensignale z.B. $\frac{Umv+Umh}{2}$ | Umv | UmR |
|---|---|---|

**Stützstellentabelle 1**

Temperaturausgang

| Temp | UTemp |
|---|---|
| T1 | UT1 |
| T2 | UT2 |
| T3 | UT3 |
| ...... | |
| T7 | UT7 |
| T8 | UT8 |

**Stützstellentabelle 2**
**für**
**(Umv-Umh) > Schwelle**
Vorströmung

| Um | Ua |
|---|---|
| x1 | y1 |
| x2 | y2 |
| x3 | y3 |
| x4 | y4 |
| x5 | y5 |
| ......... | |
| x15 | y15 |
| x16 | y16 |

**Stützstellentabelle 3**
**für**
**(Umv-Umh) < Schwelle**
Rückströmung

| Um | Ua |
|---|---|
| x1 | y1 |
| x2 | y2 |
| x3 | y3 |
| x4 | y4 |
| x5 | y5 |
| ......... | |
| x15 | y15 |
| x16 | y16 |

**Ausgabe eines konstanten Wertes**

(Nullmassenstrom)

**Stützstellentabelle4**
Temperaturkompensation

| Umv | Temp T1 | Temp T2 | Temp T3 | Temp T4 | Temp T5 |
|---|---|---|---|---|---|
| x1 | yk11 | yk12 | yk13 | yk14 | yk15 |
| x2 | yk21 | yk22 | yk23 | yk24 | yk25 |
| x3 | yk31 | yk32 | yk33 | yk34 | yk35 |
| x4 | yk41 | yk42 | yk43 | yk44 | yk45 |

**Mittelwertbildung**

1 - 4 Meßwerte

| **Ausgabekanal 2** **Temperatursignal** | **Ausgabekanal 1** **Ausgangssignal Ua** |
|---|---|

Fig. 5